# EUROPEAN PATENT APPLICATION

(11) **EP 1 197 405 A2**
(43) Date of publication of application: **17.04.2002**
(21) Application number: 01308863.8
(22) Date of filing: 18.10.2001
(51) Int. Cl.: B60S 1/04

(54) **Safety windscreen wiper assembly**

(30) Priority: 18.10.2000 GB 0025520
(71) Applicant: Trico Products (Dunstable) Limited, Dunstable, Bedfordshire LU6 1UZ (GB)
(72) Inventor: Gower, Michael, J., Luton, Bedfordshire LU4 9HE (GB)
(74) Representative: Britter, Keith Palmer

(57) **Abstract**

A windscreen wiper assembly (1) comprises a pivot shaft (10) for a windscreen wiper and a safety system (20) comprising resilient means (23) which is arranged to urge the pivot shaft (10) into its operable position and whose urging, upon the pivot shaft (10) being subjected to an impacting force, is overcome to allow movement of the pivot shaft (10).

## Description

This invention relates to a windscreen wiper assembly for vehicles with a safety system incorporated therein.

It has become clear that during accidents in which pedestrians are run-over or struck by motor vehicles, the windscreen wiper assembly can represent a significant hazard.

Windscreen wiper assemblies, as are well known in the art, comprise a wiper blade mounted on a wiper arm which is arranged to reciprocate across an associated windscreen to effect cleaning or clearing thereof. The wiper arm is usually mounted upon a wiper head which is mounted upon a pivot shaft. The pivot shaft is drivingly connected to a motor which imparts rotational motion to the shaft causing reciprocating motion in the arm, thereby clearing the windscreen of snow, rain and so on.

The pivot shaft of a conventional windscreen wiper assembly is rigidly and unmovingly mounted to the vehicle body and consequently the end thereof represents a spearing hazard to anything being forced into contact therewith. Consequently, European legislation has been enforced which requires that pivot shafts of windscreen wiper assemblies do not pose such spearing hazards.

Honda have proposed, in their British patent application (GB 2327598), to provide frangible portions which are arranged to break in response to a force acting along the axis of a pivot shaft of a windscreen wiper assembly. This situation may not match the reality of motor vehicle/pedestrian collisions however, as any impacting force may not act exclusively along that axis.

Indeed, in our co-pending European patent application, as published under EP 1033295, we propose several solutions to the above-identified problems. In the main, these solutions revolve around allowing at least the pivot shaft to move longitudinally of its axis of rotation in response to an impacting force. This solution is achieved, in the majority of embodiments, by the provision of a frangible portion which is arranged to break in response to the impacting force, allowing said motion of at least the pivot shaft. The impacting force must have a component which acts along the axis, thereby being responsive to impacting forces which impinge at, say, 45° to the axis.

We are now proposing a further solution to the above-identified spearing hazard problem.

It is an object of the present invention to provide an assembly which does not represent a spearing hazard to an impacting body and one which can control any lateral movement of the assembly or the components thereof whilst it is in its working position. Moreover, it is also an object of the invention to provide an assembly which requires less maintenance once it has been impacted by a body during an accident, test or other impact.

Accordingly, a first aspect of the invention resides in a windscreen wiper assembly comprising a pivot shaft for a windscreen wiper and a safety system comprising resilient means which, in use, is arrange to urge the shaft into its operable position and whose urging, upon the pivot shaft being subjected to an impacting force, is overcome to allow movement of the pivot shaft.

A second aspect of the invention, provides a safety system for use with a windscreen wiper assembly including a pivot shaft for a windscreen wiper, the system comprising resilient means which, in use, is arranged to urge a pivot shaft into its operable position and whose urging, upon being subjected to an impacting force, is overcome to allow movement of the pivot shaft.

In both aspects of the invention defined above, the resilient means may be arranged, upon removal of the impacting force, to urge the pivot shaft back toward or into its operable position.

In a preferred embodiment, the resilient means comprises a spring which may be pre-loaded to a force of predetermined value. The safety system may further comprise a member arranged to retract in response to the application of an impacting force. The retractable member may be acted upon by the spring or other resilient means and may comprise a bearing material, and preferably an elastomeric material.

Any other suitable form of resilient means may be employed. For example, a corrugated, collapsible cage, similar to a steering column cage of conventional type, could be used, to absorb impacting forces less than any predetermined force, in which case, the pivot shaft might not be urgable back toward its operable position upon removal of an impacting force which exceeds any force of predetermined value, even though an impacting force of less than that value would allow the pivot shaft to return to its operable position, when removed.

The retractable member may comprise an annular bearing, an annular elastomeric, such as rubber, insulator member and a flange which is preferably provided with a radial extension portion through which connection to a housing in which the pivot shaft is mounted is or can be effected.

In one embodiment, the connection of the radial extension portion to such a pivot shaft housing is pivotal, whereas in an alternative embodiment such connection is rigid.

The retractable member may be arranged, in use, to slide, upon an impacting force impinging upon the pivot shaft, against the urging of the spring or other resilient means, along an elongate member, which may comprise a bolt. The bolt or other elongate member is preferably rigidly and unmovingly connected to a portion of an associated vehicle. The bolt or other elongate member may further comprise a flange to limit the travel of the member in response to the urging of the resilient means.

The system may additionally comprise a bearing plate, a face of which may abut a shoulder portion of the bolt or other elongate member and against which the spring or other resilient means bears. The plate may further comprise an annular lip which retains the spring or other resilient means, to prevent, or at least substantially reduce, any lateral movement thereof.

When the resilient means is a spring, preferably pre-loaded to a predetermined value, such pre-loading may be a predetermined force of, say, 47ON. The spring or other resilient means may be retained by a bearing plate and a further flange.

In a preferred embodiment, the further flange is provided on a or the bolt along which, preferably, the member is arranged to slide as a consequence of an impacting force.

Also, the resilient means may be pre-loaded, where applicable, to a force of 470N.

Further, the resilient means may be arranged to urge the associated pivot shaft into its operable position via a housing in which the pivot shaft is or can be mounted and with which the safety system is or can be associated.

The inventive assembly in accordance with the first aspect of the invention, or a windscreen wiper assembly associated with a safety system in accordance with the second aspect of the invention, may be constituted by part of the associated pivot housing assembly, so that the windscreen wiper assembly could be attached to a vehicle using existing fixings without any or only minor modification.

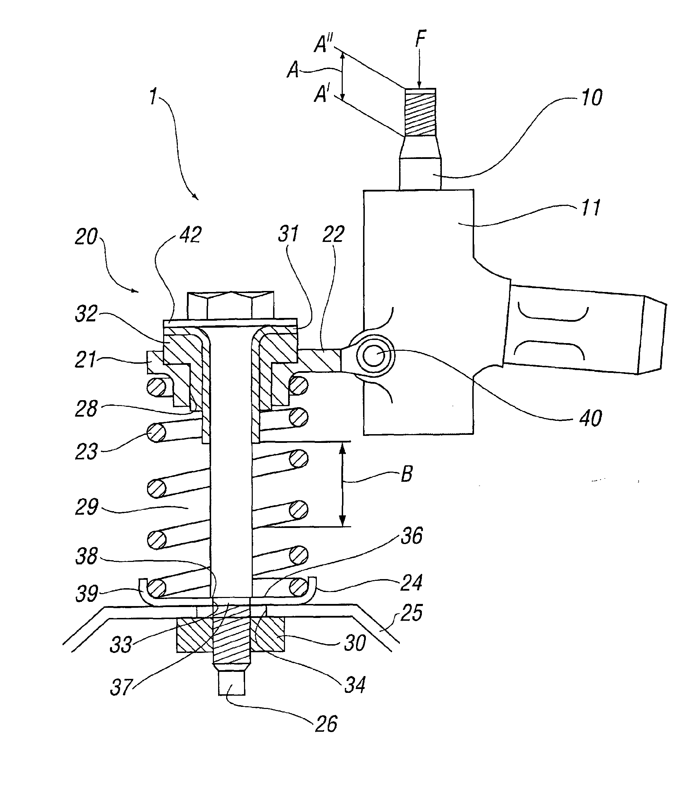

In order that the aspects of the invention may be more fully understood, an embodiment thereof will now be described by way of example only and with reference to the accompanying drawing which shows a partial cut away view of a windscreen wiper assembly.

Referring to the Figure, there is shown, generally indicated at 1, a windscreen wiper assembly comprising a pivot shaft 10 mounted in a housing 11 and arranged to impart reciprocating motion to a windscreen wiper arm and blade (not shown), by virtue of the pivot shaft 10 being drivingly connected to a drive motor (also not shown).

The assembly 1 is further provided with a safety system, generally indicated at 20, which comprises a flange 21 with a radial extension portion 22 against the underside of which flange 21 bears a spring 23. The spring 23 bears, at the other end thereof against a spring retainer plate 24 which abuts a body bracket 25, through which the system 20 is mounted to the vehicle. The safety system 20 is retained by virtue of a bolt 26 which extends through an aperture 28 in the flange 21, through the cylindrical volume 29 defined by the spring 23 and through apertures 33, 34 in the retainer plate 24 and body bracket 25 respectively, the whole being secured by virtue of a nut 30.

The bolt 26 has a annular bearing liner 31 disposed therearound which, in turn, has a annular resilient member 32, a rubber insulator, disposed therearound, the three components, bolt 26, liner 31 and member 32 extending through, and being retained in, the aperture 28 in the flange 21. At the opposed end of the bolt 26, there is a reduced circumference portion 37 which defines a shoulder 38 which abuts a face 36 of the retainer plate 24, the aperture 33 thereof being of sufficient circumference to allow the reduced circumference portion 37 of the bolt 26 to pass therethrough.

The plate 24 is provided with an annular lip 39 which acts to prevent any lateral motion of the spring 23 at the lower end thereof.

The flange 21, as previously stated, is provided with a radial extension 22 through which it is rigidly or pivotally connected, at 40, to the housing 11.

In use, a force, such as a force impacting upon the end of the pivot shaft 10, has a component F which acts along the longitudinal axis of the pivot shaft 10. The arrow A indicates the distance the end of the pivot shaft 10 must travel to withdraw from a pedestrian impact zone, which is to say that at the lower extent A' of travel A a pedestrian cannot impact with the end of the pivot shaft 11. In order to achieve such travel A, the spring 23 must compress to an extent indicated at B.

The component force F of the impact acting upon the end of the pivot shaft 10 causes motion in the direction of the longitudinal axis of the shaft 23, thereby forcing the flange 21, insulator 32 and liner 31 downwards and causing consequential compression of the spring 23, the liner 31 facilitating such downward motion with respect to the shaft of the bolt 26. The pivot shaft 10 and housing 11 are returnable to their position of operation, the top of the pivot shaft 10 being returnable to its original 'pre-impact' starting position indicated at A''.

Thus, upon removal of the impacting component force F, the resilience of the spring 23 causes the liner 31, insulator 32 and flange 21 to return to their pre-impact positions, a flange or washer 42 located on or around the bolt 26 limiting the upwards movement of those components.

Legislation is to be enacted, which defines the minimum predetermined force required to effect such retardation of pivot shafts 10 from the pedestrian impact zone. Consequently, the spring is pre-loaded to provide a force of predetermined value, such that any component force F acting along the longitudinal axis which is greater than that predetermined value, causes retardation of the pivot shaft 10.

In the case of a rigid connection, at 40, of the radial extension 22 to the housing 11, removal of the force F will cause the assembly 1 to return to its pre-impact state. In this case the travel A will be substantially the same as distance B.

If a pivotal connection is provided at 40, the housing 11 may pivot thereabout as the component force F is applied. As the load increases, the pivotal motion cannot take-up the downward motion and the spring 23 is compressed, thereby removing the end of the pivot shaft 10 from the pedestrian impact zone. In this case travel A will be greater than distance B.

In operation, a windscreen wiper assembly is subjected to enormous forces. For example, each blade may be arranged to traverse a windscreen hundreds of thousands if not millions of times during its life, often in a variety of environmental conditions. One such set of arduous conditions is during snow fall. As snow accumulates on the windscreen of a vehicle it is cleared by the windscreen wiper which tends to sweep the so-cleared snow to the far points of wiper travel. Therefore, snow is swept toward the edges of the windscreen. At the bottom edge of the windscreen snow tends to accumulate and is compressed by subsequent wiper traverses, forcing more snow to accumulate. The so-formed 'snow pack' places a large strain upon an assembly as the wiper arm is prevented from completing a full traverse of the windscreen whilst the motor attempts to drive the arm through a complete cycle.

Such internal forces cause strain on the components of an assembly and may cause internal components to break. For example, in Honda's patent application (GB 2327598) the increase in forces acting in conditions where a snow pack has formed, may cause wear and subsequent failure of frangible portions. In such cases, expensive replacement of those components is required. Moreover, after an accident where the frangible portions have correctly broken in response to an impacting force the unit must be replaced or, at the least, re-set by replacing those frangible portions.

In contradistinction to such a case, the inventive assembly 1 in suit returns to its operating position after removal of the impacting force. Furthermore, the provision of the rubber insulator 32 damps any vibration and acts to take-up any minor forces which act upon the assembly 1. The resilience of the spring 23 and the rubber insulator 32 ensures that the pivot shaft 10 is located in its correct operating position, thus the arm (not shown) is maintained such that it is parallel to the windscreen.

It should be understood that the embodiment described above is by way of example only, the scope of protection sought being determined by the appended claims. For example, the embodiment shows the spring 23 acting upon the flange 21 although, if space permitted in the associated vehicle, it would be possible to have a spring acting directly on a pivot shaft housing.

As discussed above, the spring 23 could be replaced or augmented by a corrugated, collapsible cage, similar to a steering column cage of known type. In this case, however, the housing is unlikely to be urged back toward or to its operable position by the cage, when the cage collapses under an impacting force which is at least as great as that of the minimum predetermined value.

It is to be appreciated that certain features of the invention which are, for clarity, described in the context of separate embodiments, may also be provided in combination in a single embodiment.

Conversely, various features of the invention which are, for brevity, described in the context of a single embodiment, may also be provided separately or in any suitable subcombination.

## Claims

1. A safety system (20) for a windscreen wiper assembly, comprising resilient means (23) which, in use, is arranged to urge an associated pivot shaft (10) into its operable position and whose urging, upon being subjected to an impacting force, is overcome to allow movement of the pivot shaft (10).

2. A safety system (20) according to claim 1, wherein said resilient means (23) is arranged, upon removal of the impacting force, to urge an associated pivot shaft (10) back toward its operable position.

3. A safety system (20) according to claim 1 or 2, wherein said resilient means (23) is arranged, upon removal of the impacting force, to urge an associated pivot shaft (10) back to its operable position.

4. A safety system (20) according to claim 1, 2 or 3, wherein said resilient means (23) is pre-loaded to a predetermined value.

5. A safety system (20) according to any of preceding claim, wherein said resilient means (23) comprises a spring.

6. A safety system (20) according to claim 4, wherein said resilient means (23) comprises a collapsible element which, when an associated pivot shaft (10) is subjected to an impacting force greater than the force of predetermined value to which the element is pre-loaded, is collapsed such that the pivot shaft (10) is not urged back to its operable position when the impacting force upon the pivot shaft (10) is removed.

7. A safety system (20) according to claim 6, wherein the collapsible element comprises a collapsible cage, preferably corrugated.

8. A safety system (20) according to any preceding claim, further comprising a member (21, 31, 32) arranged to retract in response to the application of an impacting force upon an associate pivot shaft (10).

9. A safety system (20) according to claim 8, wherein the member (21, 31, 32) is arranged to be acted upon by said resilient means (23).

10. A safety system (20) according to claim 8 or 9, wherein the member (21, 31, 32) comprises a bearing material (31), preferably an elastomeric material.

11. A safety system (20) according to claim 8, 9 or 10, wherein the member (21, 31, 32) comprises an annular bearing (31), an annular elastomeric, insulator member (32) and a flange (21).

12. A safety system (20) according to claim 11, wherein the material of the annular elastomeric insulator member (32) is rubber.

13. A safety system (20) according claim 11 or 12, wherein the flange (21) has a radial extension portion (22) through which connection to a housing (11) in which an associated pivot shaft (10) is mounted, can be effected.

14. A safety system (20) according to claim 13, wherein the radial extension portion (22) is arranged to be connected pivotally to an associated pivot shaft housing (11).

15. A safety system (20) according to claim 13, wherein the radial extension portion (22) is arranged to be connected rigidly to an associated pivot shaft housing (11).

16. A safety system (20) according to any of claims 8 to 15, wherein the retractable member (21, 31, 32) is arranged to slide, upon an impacting force impinging upon an associated pivot shaft (10), against the urging of said resilient means (23) along an elongate member (26).

17. A safety system (20) according to claim 16, wherein the elongate member (26) comprises a bolt.

18. A safety system (20) according to claim 16 or 17, wherein the elongate member (26) is arranged to be rigidly and unmovingly connected to a portion of a vehicle with which the system (20) is associated.

19. A safety system (20) according to claim 16, 17 or 18, wherein the elongate member (26) comprises a flange (42) to limit travel of the member (26) in response to the urging of said resilient means (23).

20. A safety system (20) according to any of claims 16 to 19 further comprising a bearing plate (24), a face (36) of which abuts a shoulder portion (38) of the elongate member (26) and against which said resilient means (23) bears.

21. A safety system (20) according to claim 20, wherein the bearing plate (24) has an annular lip (39) which retains said resilient means (23) and substantially reduces any lateral movement thereof, in use.

22. A safety system (20) according to any preceding claim, wherein said resilient means (23) is arranged to urge an associated pivot shaft (10) into its operable position via a housing (11) in which the pivot shaft (10) is housed and with which the safety system (20) can be associated.

23. A safety system according to any preceding claim, wherein said resilient urging means (23) is preloaded to a predetermined force of 47ON.

24. A windscreen wiper assembly (1) comprising a pivot shaft (10) for a windscreen wiper and a safety system (20) according to any preceding claim.

25. A windscreen wiper assembly (1) comprising a pivot shaft (10) for a windscreen wiper, a housing (11) in which the pivot shaft (10) is mounted and a safety system (20) according to any preceding claim.

26. A vehicle fitted with a safety system (20) for a windscreen wiper assembly (1), which system (20) is in accordance with any of claims 1 to 23.

27. A vehicle fitted with a safety windscreen wiper assembly (1) according to claims 24 or 25.
